# EUROPEAN PATENT SPECIFICATION

(11) **EP 2 703 262 B1**
(45) Date of publication and mention of the grant of the patent: **13.07.2016**
(21) Application number: 13182626.5
(22) Date of filing: 02.09.2013
(51) Int. Cl.: B62J 1/12, B62J 27/00, B62J 99/00

(54) **A saddle-straddling type motor vehicle**
Grätschsitzkraftfahrzeug
Véhicule à moteur de type selle à enfourcher

(30) Priority: 03.09.2012 JP 2012193180
(43) Date of publication of application: 05.03.2014
(73) Proprietor: Yamaha Hatsudoki Kabushiki Kaisha, Iwata-shi, Shizuoka 438-8501 (JP)
(72) Inventor: Iwamura, Fumiaki, Shizuoka-ken, 438-8501 (JP)
(74) Representative: Zimmermann, Tankred Klaus

(56) References cited:
- EP-A2- 2 213 565
- WO-A1-2006/111923
- JP-A- 2006 231 953

## Description

### BACKGROUND OF THE INVENTION

### (1) Field of the Invention

The present invention relates to a saddle-straddling type motor vehicle that includes a tilt angle sensor.

### (2) Description of Related Art

A tilt angle sensor is provided at a motorcycle in order to stop the operation of an engine when the motorcycle falls. In JP 2006 231953 A, the mounting structure of the tilt angle sensor is described according to the preamble of claim 1.

In the motorcycle described in JP 2006 2231953 A, one vehicle body frame is provided at right portion of a vehicle, and the other vehicle body frame is provided at left portion of the vehicle. A coupling member that couples right and left vehicle body frames is provided at a portion in the vicinity of the rear end of the right and left vehicle body frames. A pair of right and left pipe members is provided to extend upward from the vicinity of the one end and the vicinity of the other end of the coupling member. The upper ends of the pair of the pipe members are fixed by a coupling pipe. A seat catch mounting member is provided at the coupling pipe. A seat catch is provided at the seat catch mounting member. The tilt angle sensor is attached to the seat catch. In this state, the tilt angle sensor is positioned between a seat and a rear wheel.

An ECU (Electronic Control Unit) provided at the motorcycle described above detects a tilt angle of the vehicle based on a signal from the tilt angle sensor attached to the seat catch. The ECU stops the engine when a tilt angle of the vehicle exceeds a normal bank angle.

EP 2 213 565 A2 discloses a motorcycle including an article storage structure and a storage space for storing articles. The storage space is defined by a rear fender covering a rear wheel, a frame cover covering a rear portion of a motorcycle body, and a rider's seat and a passenger seat which are arranged in tandem in a longitudinal direction of the motorcycle. The storage space is provided with an onboard auxiliary machinery storage compartment for storing the onboard auxiliary machinery and an article storage compartment for storing the articles, which are formed with openings formed below the rider's seat and the passenger seat, respectively, to be opened or closed. A tilt sensor is disposed on an upper surface of an onboard auxiliary machinery holding member.

### BRIEF SUMMARY OF THE INVENTION

An object of the present invention is to provide a saddle-straddling type motor vehicle in which various types of tilt angle sensors can be provided while a height of a seat is kept low.

This object is achieved by a saddle-straddling type motor vehicle according to claim 1.

In the mounting structure of the tilt angle sensor described in JP 4475526 B, the tilt angle sensor is attached to the seat catch positioned above the vehicle body frame. In this case, a position of the seat catch is high, so that a position of the seat is high.

Further, a vertical-type tilt angle sensor, for example, is arranged such that a detector that detects the tilt of the vehicle and a wiring section that connects a wire to the detector are arranged in an up-and-down direction. Therefore, when the vertical-type tilt angle sensor is used, a large installation space in the up-and-down direction is necessary between the seat and the rear wheel. Thus, it is difficult to keep a position of the seat low.
(1) According to one aspect of the present invention, a saddle-straddling type motor vehicle includes a rear wheel, a seat on which riders are seated, a vehicle body frame, provided to extend in a front and rear direction of the vehicle, that includes a seat frame supporting the seat, a rear wheel support member that supports the rear wheel at the vehicle body frame to be swingable, a tilt angle sensor that detects a tilted state of the vehicle, and a fixing member that fixes the tilt angle sensor below the seat, wherein at least part of the seat frame is arranged between the rear wheel and the seat in an up-and-down direction of the vehicle, and the tilt angle sensor is arranged not to overlap with a vehicle central axis that passes through a center of the rear wheel in a width direction when seen in plan view.
   In the saddle-straddling type motor vehicle, the seat is supported by the seat frame. Further, the rear wheel is supported at the vehicle body frame by the rear wheel support member to be swingable. The tilt angle sensor is fixed below the seat by the fixing member. At least part of the seat frame is arranged between the rear wheel and the seat in the up-and-down direction of the vehicle.
   In this case, the tilt angle sensor is arranged not to overlap with the vehicle central axis when seen in plan view, so that the tilt angle sensor can be prevented from interfering with the rear wheel. Thus, even when a tilt angle sensor having a larger size in the up-and-down direction is used as the tilt angle sensor, the position of the seat can be prevented from being high, or the position of the seat can be kept low. Therefore, a rider can easily touch the ground when the vehicle is stopped.
   As a result, various types of tilt angle sensors can be provided while a height of the seat is kept low.
(2) The tilt angle sensor may have a main body having an upper surface and a lower surface and a wiring section connected to the upper surface or the lower surface of the main body.
   In this case, the tilt angle sensor is arranged not to overlap with the vehicle central axis when seen in plan view, so that the position of the seat can be prevented from being high, or the position of the seat can be kept low even when the main body and the wiring section of the tilt angle sensor are arranged in the up-and-down direction.
(3) A central portion of the seat in the front and rear direction of the vehicle may be positioned behind a front end portion of the rear wheel.
   In this case, the height of the seat largely depends on a size of the rear wheel. When a size of the rear wheel is large, the position of the seat is high. Even in this case, the tilt angle sensor is arranged not to overlap with the vehicle central axis when seen in plan view, so that the position of the seat is prevented from being high.
(4) The seat frame may include a pair of frame members that extends in the front and rear direction of the vehicle to be spaced apart from each other with the vehicle central axis held therebetween when seen in plan view, and the fixing member may be attached to one frame member of the pair of frame members to support the tilt angle sensor between the pair of frame members.
   In this case, the tilt angle sensor is supported by the fixing member while being positioned between the pair of frame members. Thus, the tilt angle sensor is protected by the pair of the frame members, so that the tilt angle sensor is prevented from being damaged.
(5) The saddle-straddling type motor vehicle may further include a pair of side covers provided to cover the outside of the pair of frame members in the width direction of the vehicle, wherein the pair of side covers may be provided to cover the outside of the tilt angle sensor.
   In this case, rain water or muddy water is prevented from adhering to the tilt angle sensor by the one pair of side covers. Further, a stone is prevented from colliding with the tilt angle sensor. Thus, the tilt angle sensor is prevented from being damaged.
(6) The saddle-straddling type motor vehicle may further include a cover member arranged between the rear wheel and the seat in the up-and-down direction of the vehicle, wherein the cover member may be provided to overlap with the vehicle central axis when seen in plan view, and the tilt angle sensor may be arranged between the seat and the cover member in the up-and-down direction of the vehicle.
   In this case, the cover member is positioned between the rear wheel and the tilt angle sensor, so that rain water or muddy water that splashes from the rear wheel is prevented from adhering to the tilt angle sensor. Further, a stone that splashes from the rear wheel is prevented from colliding with the tilt angle sensor. Thus, the tilt angle sensor is prevented from being damaged.
(7) The tilt angle sensor may be arranged to be positioned behind a highest end of the rear wheel in the front and rear direction of the vehicle.
   Generally, the portion of the seat on which a rider who operates the vehicle is seated is positioned in front of the highest end of the rear wheel in the front and rear direction of the vehicle body. Therefore, the tilt angle sensor is arranged behind the highest end of the rear wheel in the front and rear direction of the vehicle, so that the tilt angle sensor is positioned behind the portion of the seat on which a rider who operates the vehicle is seated. Thus, the height of the portion of the seat on which a rider who operates the vehicle is seated can be reduced. As a result, the rider can easily touch the ground when the vehicle is stopped.
(8) The fixing member may be formed of steel and may be formed to extend in the width direction of the vehicle, and the tilt angle sensor may include a pendulum member provided to be swingable in a plane parallel to the width direction and the up-and-down direction of the vehicle, a magnetic body provided at the pendulum member, and a detection element that detects a position of the magnetic body.
   In this case, the vehicle is tilted, whereby the pendulum member swings in the plane parallel to the width direction and the up-and-down direction of the vehicle according to the tilted state of the vehicle. The direction in which the pendulum member swings is parallel to the direction in which the fixing member made of steel extends. Therefore, when the pendulum member swings, a positional relationship between the magnetic body provided at the pendulum member and the fixing member does not change. As a result, the tilted state of the vehicle can be detected with high accuracy based on a position of the magnetic body detected by the detection element.
(9) The seat frame may be formed of steel, and the fixing member may have a restrictor that restricts the tilt angle sensor to move in the width direction of the vehicle.
   In this case, the tilt angle sensor is not moved in the width direction of the vehicle due to the restrictor, so that a position of the magnetic body is prevented from being changed with respect to the seat frame made of steel when the tilted state of the vehicle is stable. Thus, detection accuracy of the vehicle body being in the tilted state is prevented from being reduced.
(10) The saddle-straddling type motor vehicle may further include a seat lock device provided at the seat frame to extend in the width direction of the vehicle; and a fixture provided at a center of the seat in the width direction and removably fixed by the seat lock device, wherein the tilt angle sensor may be arranged behind the seat lock device and may be arranged on a side of the fixture in the width direction of the vehicle.
   In this case, because the tilt angle sensor is provided behind the seat lock device and is provided on a side of the fixture in the width direction of the vehicle, the tilt angle sensor is prevented from interfering with the seat lock device and the fixture while the fixture is fixed by the seat lock device. Thus, the space below the seat is effectively utilized such that various types of tilt angle sensors can be provided without lifting the position of the seat.
(11) The tilt angle sensor may include a sensor main body, and a sensor cover, having an opening into which the sensor main body can be inserted, that covers the sensor main body, and the fixing member may have an insertion portion into which the sensor main body can be inserted, and a direction in which the sensor main body is inserted into the sensor cover and a direction in which the sensor main body is inserted into the insertion portion of the fixing member may intersect each other.
   In this case, the sensor main body is inserted into the insertion portion of the fixing member after the sensor main body is inserted into the opening of the sensor cover. At this time, the sensor main body is prevented from coming out of the opening of the sensor cover.
(12) The fixing member may include a pair of plate-shaped members that extends in the width direction of the vehicle and is attached to the seat frame with a space therebetween in the front and rear direction of the vehicle, and the sensor cover may have a plurality of slits that extends in the up-and-down direction, and the sensor main body may be inserted between the pair of plate-shaped members in the width direction of the vehicle and the pair of plate-shaped plates are inserted into the plurality of slits of the sensor cover while the sensor main body is inserted into the opening of the sensor cover in the up-and-down direction.
   In this case, after the sensor main body is inserted into the opening of the sensor cover, the sensor main body is inserted into the insertion portion of the fixing member and the pair of the plate-shaped members is inserted into the plurality of slits of the sensor cover. Thus, the sensor main body is reliably fixed between the pair of the plate-shaped members while being protected by the sensor cover.
(13) The seat frame may have a circular cross sectional portion, and the fixing member may be connected by welding to a plurality of portions spaced apart from each other in a circumferential direction of the circular cross sectional portion of the seat frame.
   In this case, the fixing member is firmly fixed in the circumferential direction of the circular cross sectional portion of the seat frame. Thus, when external force is added to the fixing member in the circumferential direction of the circular cross sectional portion of the seat frame, the fixing member is prevented from being disengaged from the seat frame. Further, a decrease in detection accuracy due to a shift in the position of the tilt angle sensor is prevented.
(14) The fixing member may have a side portion positioned on a side of the seat frame and welded to a side of the seat frame, and a lower portion positioned below the seat frame and welded to a lower portion of the seat frame.
   In this case, the fixing member is firmly fixed to the seat frame. Thus, when external force is added to the fixing member, the fixing member is prevented from being disengaged from the seat frame. Further, a decrease in detection accuracy due to a shift in the position of the tilt angle sensor is prevented.
(15) A welding area at the lower portion may be larger than a welding area at the side portion.

In this case, the lower portion of the fixing member is even more firmly fixed to the lower portion of the seat frame. Thus, even when force is added to the fixing member from above toward below, the fixing member is reliably prevented from being disengaged from the seat frame and a decrease in detection accuracy due to a shift in the position of the tilt angle sensor is prevented.

Other features, elements, characteristics, and advantages of the present invention will become more apparent from the following description of preferred embodiments of the present invention with reference to the attached drawings.

### BRIEF DESCRIPTION OF THE SEVERAL VIEWS OF THE DRAWING

Fig. 1 is a side view of one side of a motorcycle according to one embodiment of the present invention;
Fig. 2 is a plan view of the motorcycle of Fig. 1 as viewed from above;
Fig. 3 is a partially enlarged plan view of the motorcycle showing a seat of Fig. 1 being removed;
Fig. 4(a) is a plan view of a fixing member bonded to a frame pipe as viewed from above, Fig. 4(b) is a side view of the fixing member bonded to the frame pipe as viewed from a side of the motorcycle, Fig. 4(c) is a back view of the fixing member bonded to the frame pipe as viewed from behind the motorcycle, Fig. 4(d) is a front view of the fixing member bonded to the frame pipe as viewed from front of the motorcycle;
Fig. 5 is an external perspective view showing part of a tilt angle sensor, a sensor cover and the fixing member of Fig. 3;
Fig. 6(a) is a side view of the tilt angle sensor attached to the frame pipe as viewed from one side of the motorcycle, and Fig. 6(b) is a side view of the tilt angle sensor attached to the frame pipe as viewed from the front of the motorcycle.

### DESCRIPTION OF THE PREFERRED EMBODIMENTS

A saddle-straddling type motor vehicle according to one embodiment of the present invention will be described below with reference to the drawings. In the following description, a motorcycle will be described as one example of the saddle-straddling type motor vehicle.

### (1) Schematic Configuration of Motorcycle

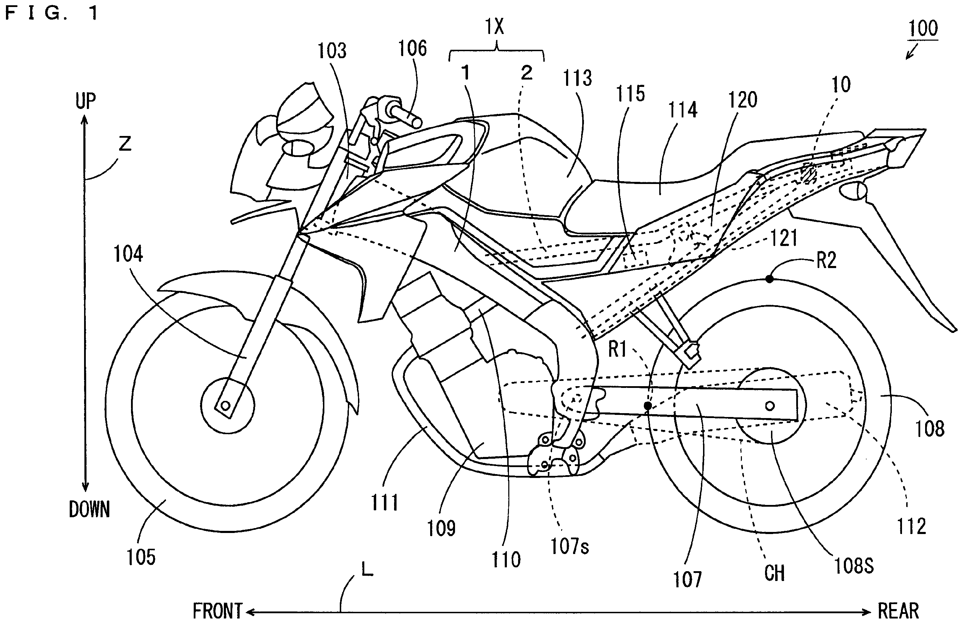

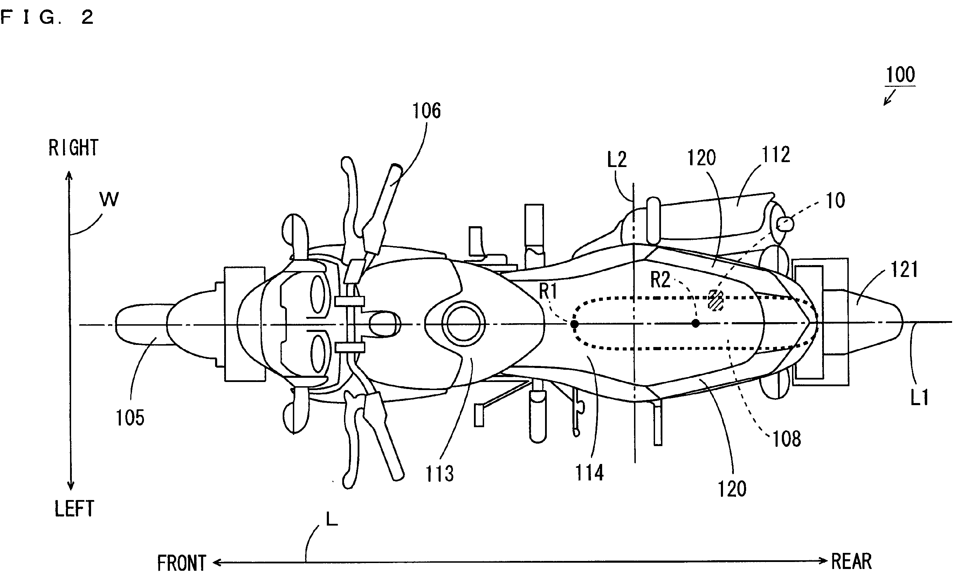

Fig. 1 is a side view of one side of the motorcycle according to one embodiment of the present invention, and Fig. 2 is a plan view of the motorcycle 100 of Fig. 1 as viewed from above. Figs. 1 and 2 show the motorcycle 100 being stood up to be vertical to a road surface. In Fig. 1, the arrows denote the front and rear direction L and the up-and-down direction Z of the motorcycle 100. Further, in Fig. 2, the arrows denote the front and rear direction L and the width direction W of the motorcycle 100.

As shown in Fig. 1, the motorcycle 100 includes a vehicle body frame 1X. The vehicle body frame 1X includes a main frame 1 and a sub-frame 2. The sub-frame 2 is attached to the rear end of the main frame 1 to extend rearward.

A head pipe 103 is provided at the front end of the main frame 1. A front fork 104 is provided at the head pipe 103 to be swingable to the left and right. A front wheel 105 is supported at the lower end of the front fork 104 to be rotatable. A handle 106 is attached to the upper end of the head pipe 103.

An engine 109 is provided in the vicinity of the lower end of the main frame 1. One end of an intake pipe 110 is attached to the intake port of the engine 109, and one end of an exhaust pipe 111 is attached to the exhaust port of the engine 109. A muffler 112 is attached to the other end of the exhaust pipe 111.

The sub-frame 2 is positioned at the upper portion of the engine 109. A fuel tank 113 is supported by the sub-frame 2 at a position above the engine 109. A seat 114 is supported by the sub-frame 2 at a position behind the fuel tank 113. The seat 114 of this example is a seat of which two seating portions for two riders are integrally formed. A rider who operates the motorcycle 100 can be seated in the front portion of the seat 114. Further, a rider who does not operate the motorcycle 100 can be seated in the rear portion of the seat 114.

An ECU (Electronic Control Unit) 115 is provided below the front portion of the seat 114. The ECU 115 includes an I/F (Interface), a CPU (Central Processing Unit), a ROM (Read Only Memory), a RAM (Random Access Memory) and a timer, for example.

A rear arm 107 is provided to extend rearward from a lower portion of the main frame 1. The front end of the rear arm 107 is attached to the main frame 1 via a support shaft 107s. The rear end of the rear arm 107 holds a rear wheel 108 and a rear wheel driven sprocket 108S to be rotatable. A chain CH is attached to the rear wheel driven sprocket 108S.

The rear arm 107 is swingable in the up-and-down direction Z with the support shaft 107s as a center by a suspension (not shown). Thus, a distance between the seat 114 and the rear wheel 108 changes during the travel on the bumpy road surface, for example.

A tilt angle sensor 10 that detects a tilted state of the motorcycle 100 is provided in a space lower than the upper surface of the seat 114 when seen in side view. Further, the tilt angle sensor 10 is provided behind the front end of the seat 114 and in front of the rear end of the seat 114 in a space lower than the upper surface of the seat 114 when seen in side view.

To be more specific, the tilt angle sensor 10 is provided below the rear portion of the seat 114. Further, the tilt angle sensor 10 is arranged behind a front end portion R1 of the rear wheel 108. Further, as shown in Fig. 2, when the motorcycle 100 stood up vertically is viewed from above, the tilt angle sensor 10 is arranged not to overlap with a vehicle central axis L1 of the motorcycle 100. The vehicle central axis L1 extends in the front and rear direction L of the motorcycle 100 and passes through the central portion of the rear wheel 108 in the width direction W. In this example, the tilt angle sensor 10 is positioned on the right side of the vehicle central axis L1. In this case, the position of the seat 114 can be prevented from being high or the position of the seat 114 can be kept low while the tilt angle sensor 10 and the rear wheel 108 are prevented from interfering with each other.

Further, the tilt angle sensor 10 is arranged to be positioned behind a highest end portion R2 of the rear wheel 108 in the front and rear direction L. The front portion of the seat 114 on which a rider who operates the motorcycle 100 is seated is positioned in front of the highest end portion R2 of the rear wheel 108 in the front and rear direction L. In this case, the tilt angle sensor 10 is positioned behind the front portion of the seat 114. Thus, the height of the front portion of the seat 114 can be reduced. As a result, a rider who operates the motorcycle 100 can easily touch the ground when the motorcycle 100 is stopped.

In Fig. 2, a seat central axis L2 of the seat 114 is shown. The seat central axis L2 extends in the width direction W at the central portion of the seat 114 in the front and rear direction L. The central portion of the seat 114 is positioned behind the front end portion R1 of the rear wheel 108 in the front and rear direction L. In this case, a clearance between the seat 114 and the rear wheel 108 is likely to be narrow. Further, the position of the seat 114 is likely to be high in order to ensure a space in which the rear wheel 108 can swing in the up-and-down direction Z. Even in this case, the tilt angle sensor 10 is arranged not to overlap with the vehicle central axis L1, so that the position of the seat 114 is prevented from being too high.

The tilt angle sensor 10 is fixed by being attached to the sub-frame 2. Details of the mounting structure of the tilt angle sensor 10 to the sub-frame 2 will be described below.

An output signal of the tilt angle sensor 10 is supplied to the ECU 115. The ECU 115 determines a tilted state of the motorcycle 100 based on an output signal of the tilt angle sensor 10. Specifically, the ECU 115 determines whether or not the vehicle central plane of the motorcycle 100 is tilted more than a predetermined angle with respect to a vertical plane parallel to the front and rear direction L. The vehicle central plane of the motorcycle 100 refers to a plane that includes the vehicle central axis L1 of the motorcycle 100 and passes through the central portion of the rear wheel 108 in the width direction W. The ECU 115 stops the operation of the engine 109 of the motorcycle 100 when the vehicle central plane of the motorcycle 100 is tilted more than a predetermined angle with respect to the vertical plane described above during the operation of the engine 109.

### (2) Sub-Frame

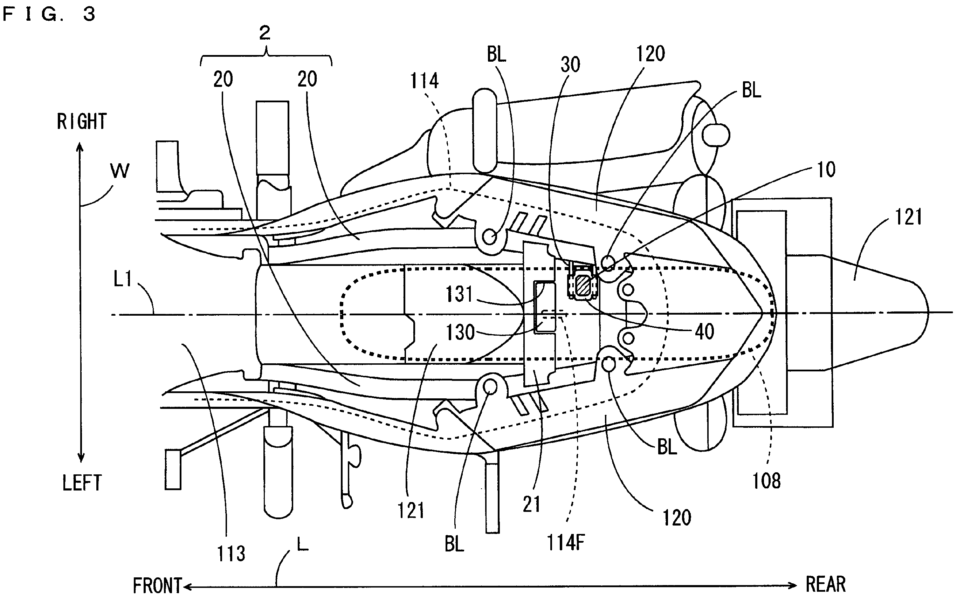

In the motorcycle 100 according to the present embodiment, the seat 114 is configured to be attachable and removable to/from the sub-frame 2 by a seat lock device 130 described below. Fig. 3 is a partially enlarged plan view of the motorcycle 100 showing the seat 114 of Fig. 1 being removed. In Fig. 3, the seat 114 being attached to the sub-frame 2 is indicated by the dotted line.

As shown in Fig. 3, in the present embodiment, the sub-frame 2 includes a pair of frame pipes 20. When the motorcycle 100 stood up vertically is viewed from above, the pair of frame pipes 20 extends in the front and rear direction L to be spaced apart from each other with the vehicle central axis L1 held therebetween. The pair of frame pipes 20 is formed of steel, respectively.

A fixing member 30 for fixing the tilt angle sensor 10 to the sub-frame 2 is provided at the one frame pipe 20 of the pair of frame pipes 20. The fixing member 30 is formed of steel and bonded by welding to the one frame pipe 20. The fixing member 30 is provided to project from the one frame pipe 20 toward the other frame pipe 20 between the pair of frame pipes 20.

The tilt angle sensor 10 covered by a sensor cover 40 is attached to the fixing member 30. In this case, when the motorcycle 100 stood up vertically is viewed from above, the title angle sensor 10 is fixed by the fixing member 30 while the tilt angle sensor 10 is positioned between the pair of frame pipes 20. Thus, the tilt angle sensor 10 is protected by the pair of frame pipes 20, so that the tilt angle sensor 10 is prevented from being damaged. Details of the configuration of the fixing member 30, the sensor cover 40 and the tilt angle sensor 10 will be described below.

### (3) Side Cover

As shown in Figs. 1 to 3, a pair of side covers 120 is attached to the pair of frame pipes 20 to cover the outside of the pair of frame pipes 20 in the width direction W. Further, as shown in Fig. 3, each side cover 120 is attached to the corresponding frame pipe 20 by two bolts BL. The tilt angle sensor 10 is positioned in a space between the pair of side covers 120 while the pair of side covers 120 are attached to the pair of frame pipes 20.

In this case, rain water or muddy water that splashes from the side of the motorcycle 100 is prevented from adhering to the tilt angle sensor 10 by the pair of side covers 120. Further, a stone that splashes from the side of the motor vehicle 100 is prevented from colliding with the tilt angle sensor 10. Thus, the tilt angle sensor 10 is prevented from being damaged.

### (4) Cover Member

As shown in Figs. 1 and 3, a cover member 121 is attached to the lower portion of the pair of frame pipes 20 to cover the entire upper portion of the rear wheel 108 from above the rear wheel 108. In Fig. 3, the rear wheel 108 covered by the cover member 121 is indicated by the bold dotted line.

In the present embodiment, the cover member 121 is arranged between the rear wheel 108 and the tilt angle sensor 10 in the up-and-down direction Z of the motorcycle 100. Thus, rain water or muddy water that splashes from the rear wheel 108 is prevented from adhering to the tilt angle sensor 10. Further, a stone that splashes from the rear wheel 108 is prevented from colliding with the tilt angle sensor 10. Thus, the tilt angle sensor 10 is prevented from being damaged.

### (5) Seat Lock Device

As shown in Fig. 3, a long-sized support plate 21 is provided at a position slightly behind the central portion of the sub-frame 2 in the front and rear direction L. The support plate 21 is arranged to extend in the width direction W. The support plate 21 is formed of steel. The one end and the other end of the support plate 21 are bonded by welding to the pair of frame pipes 20, respectively. A rectangular cutout portion 131 is formed at substantially the center of the support plate 21. The seat lock device 130 is attached to the cutout portion 131 of the support plate 21.

A seat lock bar 114F is provided at the lower surface (an opposite surface to the seating surface for riders) of the seat 114. The seat lock bar 114F is a bar-shaped member formed to be substantially U-shaped, for example, and provided at the central portion of the seat 114 in the width direction W.

At the time of attachment of the seat 114 to the sub-frame 2, a rider places the seat 114 on the sub-frame 2 such that the seat lock bar 114F overlaps with the seat lock device 130. In this state, the rider presses the seat 114 downward. Thus, the seat lock device 130 fixes the seat lock bar 114F.

On the other hand, at the time of removal of the seat 114 from the sub-frame 2, the rider inserts the key for the motorcycle 100 into a key hole (not shown) and operates the key. Thus, the seat lock device 130 releases the fixed state of the seat lock bar 114F. The key hole for releasing the fixed state of the seat lock bar 114F is provided at a portion of the cover member 121, for example.

In the present embodiment, the tilt angle sensor 10 is arranged behind the seat lock device 130 and is arranged on the side of the seat lock bar 114F in the width direction W while the seat 114 is attached to the sub-frame 2.

In this case, the tilt angle sensor 10 and the seat lock bar 114F are prevented from interfering with each other while the seat lock bar 114F is fixed by the seat lock device 130. Thus, a space below the seat 114 is effectively utilized, whereby various types of the tilt angle sensor 10 can be provided without lifting the position of the upper surface of the seat 114.

### (6) Details of Fixing Member

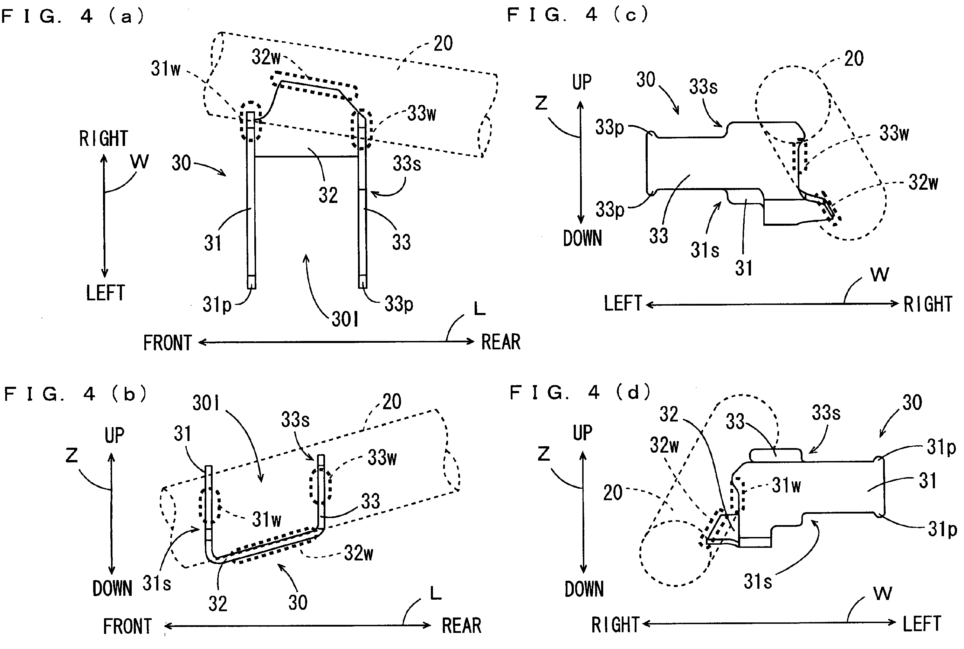

Fig. 4(a) is a plan view of the fixing member 30 bonded to the frame pipe 20 as viewed from above. Fig. 4(b) is a side view of the fixing member 30 bonded to the frame pipe 20 as viewed from the side of the motorcycle 100. Fig. 4(c) is a back view of the fixing member 30 bonded to the frame pipe 20 as viewed from behind the motorcycle 100. Fig. 4(d) is a front view of the fixing member 30 bonded to the frame pipe 20 as viewed from the front of the motorcycle 100. In Figs. 4(a) to 4(d), the frame pipe 20 is indicated by the dotted line. Further, the front and rear direction L, the width direction W and the up-and-down direction Z are denoted by the arrows.

The fixing member 30 is fabricated by bending one steel plate formed into a predetermined shape. As shown in Figs. 4(a) to 4(d), the fixing member 30 is constituted by a front plate 31, a lower plate 32 and a rear plate 33.

The front plate 31 is formed to be parallel to the up-and-down direction Z and the width direction W while the fixing member 30 is bonded to the one frame pipe 20. Further, the front plate 31 is formed to extend toward the other frame pipe 20.

Similarly to the front plate 31, the rear plate 33 is formed to be parallel to the up-and-down direction Z and the width direction W while the fixing member 30 is bonded to the one frame pipe 20. Further, the rear plate 33 is formed to extend toward the other frame pipe 20.

The front plate 31 and the rear plate 33 are bonded to the one frame pipe 20 with a clearance in-between in the front and rear direction L. Thus, an insertion portion 30I into which the tilt angle sensor 10 can be inserted, as described below, is formed between the front plate 31 and the rear plate 33.

The lower plate 32 is formed to connect a portion of the lower end of the front plate 31 and a portion of the lower end of the rear plate 33. The lower plate 32 has a side portion 32w for bonding formed to come into contact with a partial region of the lower end of the frame pipe 20 while the fixing member 30 is bonded to the one frame pipe 20.

As shown in Fig. 4(c), a portion with a constant length from the frame pipe 20 of the upper end of the rear plate 33 is formed to be higher than the remaining portion. Therefore, a step 33s is formed at the upper end of the rear plate 33. Further, projections 33p that project upward and downward are formed at the tip end of the rear plate 33.

As shown in Fig. 4(d), a portion with a constant length from the frame pipe 20 of the lower end of the front plate 31 is formed to be lower than the remaining portion. Thus, a step 31s is formed at the lower end of the front plate 31. Further, projections 31 p that project upward and downward are formed at the tip end of the front plate 31.

As shown in Figs. 4(a) to 4(d), a bonding portion in the one frame pipe 20 with the fixing member 30 has a circular cross section. When the fixing member 30 is bonded to the frame pipe 20, a portion 31w of the end of the front plate 31 is bonded by welding to the side of the frame pipe 20. Further, a portion 33w of the end of the rear plate 33 is bonded by welding to the side of the frame pipe 20. Further, the upper surface of the side portion 32w for bonding of the lower plate 32 is bonded by welding to the lower portion of the frame pipe 20.

In this case, the fixing member 30 is firmly fixed by welding to a plurality of portions spaced part from each other in the circumferential direction of the frame pipe 20. Thus, when external force is added to the fixing member 30 in the circumferential direction of the frame pipe 20 while the fixing member 30 is bonded to the frame pipe 20, the fixing member 30 is prevented from being disengaged from the one frame pipe 20.

In particular, in the present embodiment, an area of the welding portion of the lower plate 32 in the one frame pipe 20 is larger than areas of the welding portions of the front plate 31 and the rear plate 33 in the one frame pipe 20.

In this case, the lower plate 32 is more firmly fixed to the one frame pipe 20 than the front plate 31 and the rear plate 33. Thus, even when force is added to the fixing member 30 from above toward below, the fixing member 30 is reliably prevented from being disengaged from the one frame pipe 20.

As described above, the fixing member 30 is firmly fixed to the one frame pipe 20. Thus, when the tilt angle sensor 10 is provided at the insertion portion 30I of the fixing member 30, a shift in the position of the tilt angle sensor 10 due to disengagement of the fixing member 30 from the one frame pipe 20 is prevented. As a result, a decrease in detection accuracy due to a shift in the position of the tilt angle sensor 10 is prevented.

### (7) Details of Tilt Angle Sensor and Sensor Cover

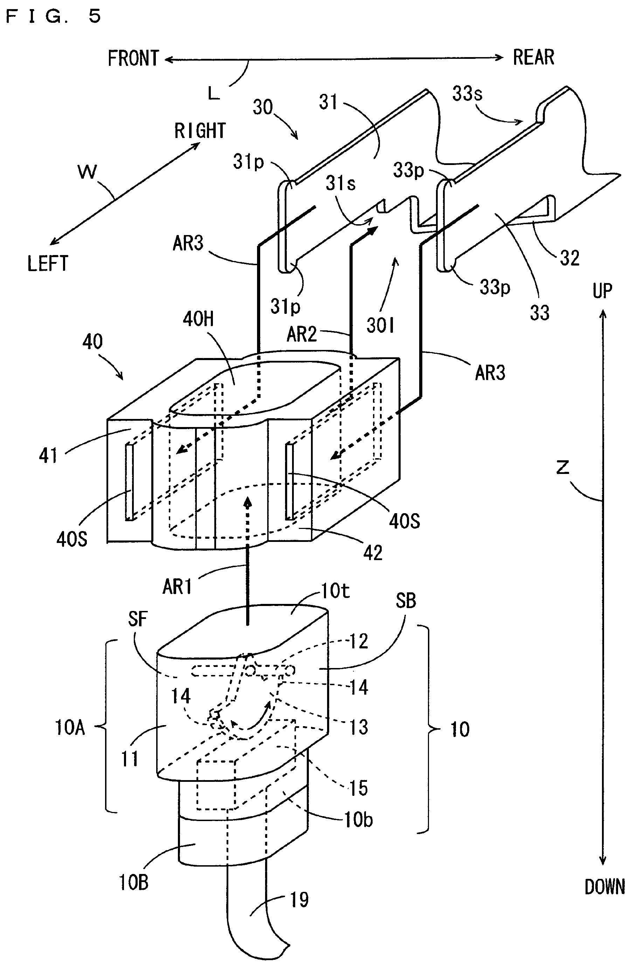

Fig. 5 is an external perspective view showing part of the tilt angle sensor 10, the sensor cover 40 and the fixing member 30 of Fig. 3.

First, the configuration of the tilt angle sensor 10 will be described. As shown in Fig. 5, the tilt angle sensor 10 is constituted by a main body 10A and a wiring section 10B. The main body 10A includes a casing 11, a rotation shaft 12, a pendulum member 13, a magnetic body 14 and a detection element 15. The casing 11 includes an upper surface 10t and a lower surface 10b. The casing 11 stores the rotation shaft 12, the pendulum member 13, the magnetic body 14 and the detection element 15.

In the following description, a portion of the casing 11 facing the front of the motorcycle 100 is referred to as a sensor front portion SF, and a portion of the casing 11 facing the behind of the motorcycle 100 is referred to as a sensor rear portion SB on the assumption that the tilt angle sensor 10 is attached to the motorcycle 100. The front and rear direction L, the width direction W and the up-and-down direction Z are also defined in the tilt angle sensor 10 similarly to the motorcycle 100.

The rotation shaft 12 is provided in the casing 11 to extend in the front and rear direction L of the tilt angle sensor 10. The substantially semicircular pendulum member 13 is attached to the rotation shaft 12 to be swingable.

The pendulum member 13 is formed of insulative resin material, for example. The magnetic bodies 14 are respectively attached to regions in the vicinity of the both ends of the pendulum member 13 in the width direction W. A magnet, for example, is used as the magnetic body 14.

A detection element 15 is provided below the pendulum member 13 in the up-and-down direction Z. The detection element 15 is a magnetic sensor that can detect magnetic field generated by the magnetic body 14, and a hall element, for example, is used.

The wiring section 10B is connected to the lower surface 10b of the casing 11. Thus, the detection element 15 is connected to a wiring 19 that extends downward from the wiring section 10B.

The tilt angle sensor 10 described above is attached to the motorcycle 100. In this case, the pendulum member 13 is swingable in a plane parallel to the width direction W and the up-and-down direction Z. Therefore, when the motorcycle 100 is tilted during traveling, the pendulum member 13 swings relative to the detection element 15. The detection element 15 detects the magnetic field generated by the magnetic body 14, and outputs a detection result to the ECU 115 of Fig. 1.

Next, the configuration of the sensor cover 40 will be described. The sensor cover 40 has a substantially cubic shape and is formed of rubber, for example. A sensor insertion hole 40H that extends in the up-and-down direction Z is provided at the center of the sensor cover 40. The sensor insertion hole 40H is formed such that the main body 10A of the tilt angle sensor 10 can be inserted thereinto.

Further, two supporters 41, 42 parallel to the width direction W are formed at the sensor cover 40 to hold the sensor insertion hole 40H therebetween. A slit 40S that extends in the up-and-down direction Z and penetrates in the width direction W are formed at each of the supporters 41, 42.

The tilt angle sensor 10 is attached to the frame pipe 20 of the sub-frame 2 as describe below. First, as denoted by the thick arrow AR1 in Fig. 5, the tilt angle sensor 10 is inserted into the sensor insertion hole 40H of the sensor cover 40 in the up-and-down direction Z.

Next, as denoted by the thick arrow AR2 in Fig. 5, the tilt angle sensor 10 is inserted into the insertion portion 30I of the fixing member 30 in the width direction W. At this time, as denoted by the thick arrow AR3 in Fig. 5, the front plate 31 and the rear plate 33 of the fixing member 30 are respectively inserted into the two slits 40S of the sensor cover 40.

Thus, the main body 10A of the tilt angle sensor 10 is reliably fixed between the front plate 31 and the rear plate 33 of the fixing member 30 while being protected by the sensor cover 40.

As described above, in the present embodiment, the insertion direction (the up-and-down direction Z) of the main body 10A of the tilt angle sensor 10 into the sensor cover 40 and the insertion direction (the width direction W) of the tilt angle sensor 10 into the insertion portion 30I of the fixing member 30 intersect with each other. Thus, when the tilt angle sensor 10 is attached to the frame pipe 20, the main body 10A of the tilt angle sensor 10 is prevented from coming out of the sensor insertion hole 40H of the sensor cover 40.

As described above, the motorcycle 100 is tilted while the tilt angle sensor 10 is attached to the frame pipe 20. In this case, the pendulum member 13 swings in a plane parallel to the width direction W and the up-and-down direction Z according to the tilted state of the motorcycle 100. The direction in which the pendulum member 13 swings is parallel to the direction in which the front plate 31 and the rear plate 33 of the fixing member 30 made of steel extend. Therefore, when the pendulum member 13 swings, a distance between the magnetic body 14 provided at the pendulum member 13 and the front plate 31 and a distance between the magnetic body 14 and the rear plate 33 do not change. As a result, the tilted state of the motorcycle 100 is detected with high accuracy based on a position detected by the detection element 15 of the magnetic body 14 in the width direction W.

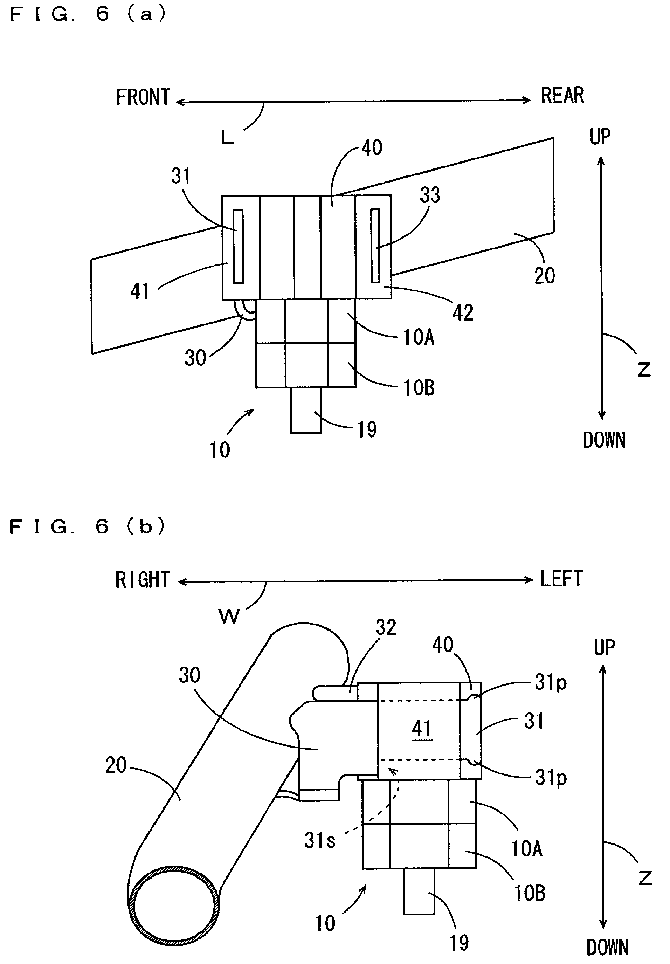

Fig. 6(a) is a side view of the tilt angle sensor 10 attached to the frame pipe 20 as viewed from one side of the motorcycle 100, and Fig. 6(b) is a side view of the tilt angle sensor 10 attached to the frame pipe 20 as viewed from the front of the motorcycle 100.

As shown in Fig. 6(a), in the present embodiment, the main body 10A of the tilt angle sensor 10 has a portion positioned lower than the lower surface of a portion of the frame pipe 20 to which the fixing member 30 is bonded when seen in side view.

Thus, in the tilt angle sensor 10, the main body 10A and the wiring section 10B are arranged in the up-and-down direction Z and the portion of the main body 10A is positioned below the frame pipe 20. Even in this case, when the motorcycle 100 stood up vertically is viewed from above, the tilt angle sensor 10 is arranged not to overlap with the vehicle central axis L1, whereby the position of the seat 114 can be prevented from being high or the position of the seat 114 can be kept low.

As shown in Fig. 6(b), the one supporter 41 of the sensor cover 40 is positioned among the two projections 31 p and the step 31s of the front plate 31 in the width direction W while the tilt angle sensor 10 is attached to the frame pipe 20. In this case, the step 31s and the two projections 31 p function as a restrictor that restricts the sensor cover 40 to move in the width direction W.

Similarly, the other supporter 42 of the sensor cover 40 is positioned among the two projections 33p and the step 33s (Fig. 4(c)) of the rear plate 33 (Fig. 4(c)) in the width direction W while the tilt angle sensor 10 is attached to the frame pipe 20. In this case, the step 33s and the two projections 33p function as a restrictor that restricts the sensor cover 40 to move in the width direction W.

Thus, the tilt angle sensor 10 is not moved in the width direction W, so that a distance between the tilt angle sensor 10 and the frame pipe 20 made of steel is prevented from changing. Therefore, detection accuracy of the motorcycle 100 in the tilted state is prevented from being reduced.

### (8) Effects

The diameter of the outer periphery at the center of the rear wheel 108 in the width direction W is larger than a diameter of an outer periphery of a portion other than the center of the rear wheel 108 in the width direction. Therefore, when the motorcycle 100 stood up vertically is viewed from above, if the tilt angle sensor 10 is arranged to overlap with the vehicle central axis L1, the tilt angle sensor 10 is likely to interfere with the rear wheel 108.

In contrast, in the motorcycle 100 according to the present embodiment, when the motorcycle 100 stood up vertically is viewed from above, the tilt angle sensor 10 is arranged not to overlap with the vehicle center axis L1. Thus, the tilt angle sensor 10 can be prevented from interfering with the central portion of the rear wheel 108 in the width direction W. Further, even when the tilt angle sensor 10 having a larger size in the up-and-down direction Z is used, the position of the seat 114 can be prevented from being high, or the position of the seat 114 can be kept low. Therefore, a rider can easily touch the ground when the motorcycle 100 is stopped.

As a result, various types of the tilt angle sensor 10 can be provided while the height of the seat 114 is kept low.

### (9) Other Embodiments

While a vertical-type tilt angle sensor in which the main body 10A that detects a tilted state of the motorcycle 100 and the wiring section 10B are arranged in the up-and-down direction Z is used as the tilt angle sensor 10 in the embodiment described above, the invention is not limited to this. A horizontal-type tilt angle sensor 10 in which the main body 10A and the wiring section 10B are arranged in the front and rear direction L or the width direction W may be used as the tilt angle sensor 10. In this case, a size of the tilt angle sensor 10 in the up-and-down direction Z of the motorcycle 100 is smaller, so that the height of the seat can be kept even lower.

While the motorcycle 100 according to the embodiment described above includes the seat 114, the invention is not limited to this. The motorcycle 100 may separately include a seat for a rider who operates the motorcycle 100 and a seat for a rider who does not operate the motorcycle 100 instead of the seat 114. In this case, in the front and rear direction L of the motorcycle 100, the rear end of the seat for a rider who operates the motorcycle 100 may be positioned behind the front end portion R1 of the rear wheel 108 of Figs. 1 and 2. Further, in the front and rear direction L of the motorcycle 100, the front end of the seat for a rider who does not operate the motorcycle 100 may be positioned behind the front end portion R1 of the rear wheel 108 of Figs. 1 and 2.

Further, the motorcycle 100 may include a seat for a rider who operates the motorcycle 100 only instead of the seat 114. In this case, in the front and rear direction L, the rear end of the seat for a rider who operates the motorcycle 100 may be positioned behind the front end portion R1 of the rear wheel 108 of Figs. 1 and 2.

While the fixing member 30 is bonded by welding to the one frame pipe 20 of the sub-frame 2 in the present embodiment, the invention is not limited to this. The fixing member 30 may be connected to the frame pipe 20 using a screw. In this case, the fixing member 30 can be easily attached to the frame pipe 20. Further, the fixing member 30 can be easily removed from the frame pipe 20.

While the magnetic bodies 14 are respectively attached to regions in the vicinity of the both ends of the pendulum member 13 of the tilt angle sensor 10 in the embodiment described above, a number and a position of the magnetic bodies 14 attached to the pendulum member 13 are not limited to the examples described above. For example, the only one magnetic body 14 may be provided at the central position of the outer periphery of the pendulum member 13.

While the embodiment described above is an example in which the present invention is applied to the motorcycle, the invention is not limited to this. The present invention may be applied to another saddle-straddling type motor vehicle such as a motor tricycle, an ATV (All Terrain Vehicle) or the like.

### (10) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the embodiment described above, the motorcycle 100 is an example of a saddle-straddling type motorcycle, the rear wheel 108 is an example of a rear wheel, the seat 114 is an example of a seat, the sub-frame 2 and the pair of frame pipes 20 are examples of a seat frame and the vehicle body frame 1X is an example of a vehicle body frame.

Further, the rear arm 107 is an example of a rear wheel support member, the tilt angle sensor 10 is an example of a tilt angle sensor, the fixing member 30 is an example of a fixing member, the vehicle center axis L1 is an example of a vehicle central axis and the pair of frame pipes 20 is an example of a pair of frame members.

Further, the pair of side covers 120 is an example of a pair of side covers, the cover member 121 is an example of a cover member, the pendulum member 13 is an example of a pendulum member, the magnetic body 14 is an example of a magnetic body and the detection element 15 is an example of a detection element.

Further, the step 31s and the two projections 31 p of the front plate 31 and the step 33s and the two projections 33p of the rear plate 33 in the fixing member 30 are examples of a restrictor.

Further, the seat lock device 130 is an example of a seat lock device, the seat lock bar 114F is an example of a fixture, the upper surface 10t is an example of an upper surface, the lower surface 10b is an example of a lower surface, the main body 10A is an example of a main body and a sensor body, and the wiring section 10B is an example of a wiring section.

Further, the sensor insertion hole 40H is an example of an opening, the sensor cover 40 is an example of a sensor cover, the insertion portion 30I is an example of an insertion portion, the front plate 31 and the rear plate 33 are example of a pair of plate members and the slit 40S is an example of a slit.

Further, the front plate 31 and the rear plate 33 are examples of a side portion and the lower plate 32 is an example of a lower portion.

As each of various elements recited in the claims, various other constituent elements having configurations or functions described in the claims can be also used.

### INDUSTRIAL APPLICABILITY

The present invention can be effectively utilized for a vehicle that includes a tilt angle sensor.

## Claims

1. A saddle-straddling type motor vehicle, comprising:
a rear wheel (108);
a seat (114);
a vehicle body frame (1X) extending in a front and rear direction (L) of the vehicle (100) and including a seat frame (20) adapted to support the seat (114);
a rear wheel support member (107) adapted to support the rear wheel (108) at the vehicle body frame (1X) to be swingable;
a tilt angle sensor (10) adapted to detect a tilted state of the vehicle (100); and
a fixing member (30) adapted to fix the tilt angle sensor (10) below the seat (114), wherein
at least part of the seat frame (20) is arranged between the rear wheel (108) and the seat (114) in an up-and-down direction (Z) of the vehicle (100); **characterized in that**
the tilt angle sensor (10) is arranged not to overlap with a vehicle central axis (L1) passing through a center of the rear wheel (108) in a width direction (W) when seen in plan view.

2. The saddle-straddling type motor vehicle according to claim 1, wherein
the tilt angle sensor (10) has a main body (10A) having an upper surface (10t) and a lower surface (10b) and a wiring section (10B) connected to the upper surface (10t) or the lower surface (10b) of the main body (10A).

3. The saddle-straddling type motor vehicle according to claim 1 or 2, wherein
a central portion of the seat (114) in the front and rear direction (L) of the vehicle (100) is positioned behind a front end portion (R1) of the rear wheel (108).

4. The saddle-straddling type motor vehicle according to any one of claims 1 to 3, wherein
the seat frame (20) includes a pair of frame members extending in the front and rear direction (L) of the vehicle (100) to be spaced apart from each other with the vehicle central axis (L1) therebetween when seen in plan view, and
the fixing member (30) is attached to one frame member of the pair of frame members to support the tilt angle sensor (10) between the pair of frame members.

5. The saddle-straddling type motor vehicle according to claim 4, further comprising:
a pair of side covers (120) provided to cover the outside of the pair of frame members in the width direction (W) of the vehicle (100), wherein
the pair of side covers (120) are provided to cover the outside of the tilt angle sensor (10).

6. The saddle-straddling type motor vehicle according to any one of claims 1 to 5, further comprising:
a cover member (121) arranged between the rear wheel (108) and the seat (114) in the up-and-down direction (Z) of the vehicle (100), wherein
the cover member (121) is provided to overlap with the vehicle central axis (L1) when seen in plan view, and
the tilt angle sensor (10) is arranged between the seat (114) and the cover member (121) in the up-and-down direction (Z) of the vehicle (100).

7. The saddle-straddling type motor vehicle according to any one of claims 1 to 6, wherein
the tilt angle sensor (10) is arranged to be positioned behind a highest end (R2) of the rear wheel (108) in the front and rear direction (L) of the vehicle (100).

8. The saddle-straddling type motor vehicle according to any one of claims 1 to 7, wherein
the fixing member (30) is formed of steel and is formed to extend in the width direction (W) of the vehicle (100), and
the tilt angle sensor (10) includes
a pendulum member (13) provided to be swingable in a plane parallel to the width direction (W) and the up-and-down direction (Z) of the vehicle (100),
a magnetic body (14) provided at the pendulum member (13), and
a detection element (15) adapted to detect a position of the magnetic body (14).

9. The saddle-straddling type motor vehicle according to claim 8, wherein
the seat frame (20) is formed of steel, and
the fixing member (30) has a restrictor (31 p, 31s, 33p, 33s) adapted to restrict the tilt angle sensor (10) to move in the width direction (W) of the vehicle (100).

10. The saddle-straddling type motor vehicle according to any one of claims 1 to 9, further comprising:
a seat lock device (130) provided at the seat frame (20) to extend in the width direction (W) of the vehicle (100); and
a fixture (114F) provided at a center of the seat (114) in the width direction (W) and removably fixed by the seat lock device (130), wherein
the tilt angle sensor (10) is arranged behind the seat lock device (130) and is arranged on a side of the fixture (114F) in the width direction (W) of the vehicle (100).

11. The saddle-straddling type motor vehicle according to any one of claims 1 to 10, wherein
the tilt angle sensor (10) includes
a sensor main body (10A), and
a sensor cover (40) adapted to cover the sensor main body (10A), the sensor cover (40) having an opening (40H) for receiving the sensor main body (10A), and
the fixing member (30) has an insertion portion (30I) for receiving the sensor main body (10A), and
an insertion direction of the sensor main body (10A) into the sensor cover (40) and an insertion direction of the sensor main body (10A) into the insertion portion (30I) of the fixing member (30) intersect each other.

12. The saddle-straddling type motor vehicle according to claim 11, wherein
the fixing member (30) includes a pair of plate-shaped members (31, 33) extending in the width direction (W) of the vehicle (100) and being attached to the seat frame (20) with a space therebetween in the front and rear direction (L) of the vehicle (100),
the sensor cover (40) has a plurality of slits (40S) extending in the up-and-down direction (Z),
the sensor main body (10A) is adapted to be inserted between the pair of plate-shaped members (31, 33) in the width direction (W) of the vehicle (100), and
the pair of plate-shaped plates are adapted to be inserted into the plurality of slits (40S) of the sensor cover (40) with the sensor main body (10A) arranged in the opening (40H) of the sensor cover (40).

13. The saddle-straddling type motor vehicle according to any one of claims 1 to 12, wherein
the seat frame (20) has a circular cross sectional portion, and
the fixing member (30) is connected by welding to a plurality of portions spaced apart from each other in a circumferential direction of the circular cross sectional portion of the seat frame (20).

14. The saddle-straddling type motor vehicle according to any one of claims 1 to 13, wherein
the fixing member (30) has
a side portion (31w, 33w) positioned on a side of the seat frame (20) and welded to a side portion of the seat frame (20), and
a lower portion (32w) positioned below the seat frame (20) and welded to a lower portion of the seat frame (20).

15. The saddle-straddling type motor vehicle according to claim 14, wherein
a welding area at the lower portion (32w) is larger than a welding area at the side portion (31w, 33w).

## Patentansprüche

1. Ein Kraftfahrzeug vom Sattel-Grätschsitztyp, das folgende Merkmale aufweist:
ein Hinterrad (108);
einen Sitz (114);
einen Fahrzeugkarosserierahmen (1X), der sich in eine Vorne-und-hinten-Richtung (L) des Fahrzeugs (100) erstreckt und einen Sitzrahmen (20) umfasst, der angepasst ist, den Sitz (114) zu tragen;
ein Hinterradträgerbauglied (107), das angepasst ist, das Hinterrad (108) dahingehend an dem Fahrzeugkarosserierahmen (1X) zu tragen, dass es schwingbar ist;
einen Kippwinkelsensor (10), der angepasst ist, einen gekippten Zustand des Fahrzeugs (100) zu erfassen; und
ein Befestigungsbauglied (30), das angepasst ist, den Kippwinkelsensor (10) unterhalb des Sitzes (114) zu befestigen, wobei
zumindest ein Teil des Sitzrahmens (20) in einer Auf- und Ab-Richtung (Z) des Fahrzeugs (100) zwischen dem Hinterrad (108) und dem Sitz (114) angeordnet ist;
**dadurch gekennzeichnet, dass**
der Kippwinkelsensor (10) dahingehend angeordnet ist, nicht mit einer Fahrzeugmittelachse (L1) zu überlappen, die in der Draufsicht betrachtet in einer Breitenrichtung (W) durch eine Mitte des Hinterrads (108) verläuft.

2. Das Kraftfahrzeug vom Sattel-Grätschsitztyp gemäß Anspruch 1, bei dem der Kippwinkelsensor (10) einen Hauptkörper (10A) aufweist; der eine obere Oberfläche (10t) und eine untere Oberfläche (10b) und ein Verdrahtungssegment (10B) aufweist, das mit der oberen Oberfläche (10t) oder der unteren Oberfläche (10b) des Hauptkörpers (10A) verbunden ist.

3. Das Kraftfahrzeug vom Sattel-Grätschsitztyp gemäß Anspruch 1 oder 2, bei dem
ein Mittelabschnitt des Sitzes (114) in der Vorne-und-hinten-Richtung (L) des Fahrzeugs (100) hinter einem Vorderendabschnitt (R1) des Hinterrads (108) positioniert ist.

4. Das Kraftfahrzeug vom Sattel-Grätschsitztyp gemäß einem der Ansprüche 1 bis 3, bei dem
der Sitzrahmen (20) ein Paar von Rahmenbaugliedern umfasst, die sich in der Vorne-und-hinten-Richtung (L) des Fahrzeugs (100) erstrecken, um voneinander beabstandet zu sein, wobei sich die Fahrzeugmittelachse (L1) in der Draufsicht betrachtet zwischen denselben befindet, und
das Befestigungsbauglied (30) an einem Rahmenbauglied des Paars von Rahmenbaugliedern angebracht ist, um den Kippwinkelsensor (10) zwischen dem Paar von Rahmenbaugliedern zu tragen.

5. Das Kraftfahrzeug vom Sattel-Grätschsitztyp gemäß Anspruch 4, das ferner folgendes Merkmal aufweist:
ein Paar von Seitenabdeckungen (120), die bereitgestellt sind, um in der Breitenrichtung (W) des Fahrzeugs (100) die Außenseite des Paars von Rahmenbaugliedern abzudecken, wobei
das Paar von Seitenabdeckungen (120) bereitgestellt ist, um die Außenseite des Kippwinkelsensors (10) abzudecken.

6. Das Kraftfahrzeug vom Sattel-Grätschsitztyp gemäß einem der Ansprüche 1 bis 5, das ferner folgendes Merkmal aufweist:
ein Abdeckungsbauglied (121), das in der Auf- und Ab-Richtung (Z) des Fahrzeugs (100) zwischen dem Hinterrad (108) und dem Sitz (114) angeordnet ist, wobei
das Abdeckungsbauglied (121) bereitgestellt ist, um in der Draufsicht betrachtet mit der Fahrzeugmittelachse (L1) zu überlappen, und
der Kippwinkelsensor (10) in der Auf- und Ab-Richtung (Z) des Fahrzeugs (100) zwischen dem Sitz (114) und dem Abdeckungsbauglied (121) angeordnet ist.

7. Das Kraftfahrzeug vom Sattel-Grätschsitztyp gemäß einem der Ansprüche 1 bis 6, bei dem
der Kippwinkelsensor (10) angeordnet ist, in der Vorne-und-hinten-Richtung (L) des Fahrzeugs (100) hinter einem höchsten Ende (R2) des Hinterrads (108) positioniert zu sein.

8. Das Kraftfahrzeug vom Sattel-Grätschsitztyp gemäß einem der Ansprüche 1 bis 7, bei dem
das Befestigungsbauglied (30) aus Stahl gebildet ist und gebildet ist, sich in der Breitenrichtung (W) des Fahrzeugs (100) zu erstrecken, und
der Kippwinkelsensor (10) Folgendes umfasst:
ein Pendelbauglied (13), das bereitgestellt ist, um in einer Ebene, die parallel zu der Breitenrichtung (W) und der Auf- und Ab-Richtung (Z) des Fahrzeugs (100) ist, schwingbar zu sein,
einen Magnetkörper (14), der an dem Pendelbauglied (13) bereitgestellt ist, und
ein Erfassungselement (15), das angepasst ist, eine Position des Magnetkörpers (14) zu erfassen.

9. Das Kraftfahrzeug vom Sattel-Grätschsitztyp gemäß Anspruch 8, bei dem der Sitzrahmen (20) aus Stahl gebildet ist und
das Befestigungsbauglied (30) einen Begrenzer (31 p, 31 s, 33p, 33s) aufweist, der angepasst ist, den Kippwinkelsensor (10) zu begrenzen, sich in der Breitenrichtung (W) des Fahrzeugs (100) zu bewegen.

10. Das Kraftfahrzeug vom Sattel-Grätschsitztyp gemäß einem der Ansprüche 1 bis 9, das ferner folgende Merkmale aufweist:
eine Sitzverriegelungsvorrichtung (130), die an dem Sitzrahmen (20) bereitgestellt ist, um sich in der Breitenrichtung (W) des Fahrzeugs (100) zu erstrecken; und
eine Halterung (114F), die in der Breitenrichtung (W) in einer Mitte des Sitzes (114) vorgesehen ist und durch die Sitzverriegelungsvorrichtung (130) abnehmbar befestigt ist, wobei
der Kippwinkelsensor (10) hinter der Sitzverriegelungsvorrichtung (130) angeordnet ist und in der Breitenrichtung (W) des Fahrzeugs (100) an einer Seite der Halterung (114F) angeordnet ist.

11. Das Kraftfahrzeug vom Sattel-Grätschsitztyp gemäß einem der Ansprüche 1 bis 10, bei dem
der Kippwinkelsensor (10) Folgendes umfasst:
einen Sensorhauptkörper (10A) und
eine Sensorabdeckung (40), die angepasst ist, den Sensorhauptkörper (10A) abzudecken, wobei die Sensorabdeckung (40) eine Öffnung (40H) zum Aufnehmen des Sensorhauptkörpers (10A) aufweist, und
das Befestigungsbauglied (30) einen Einführungsabschnitt (30I) zum Aufnehmen des Sensorhauptkörpers (10A) aufweist und
eine Einführungsrichtung des Sensorhauptkörpers (10A) in die Sensorabdeckung (40) und eine Einführungsrichtung des Sensorhauptkörpers (10A) in den Einführungsabschnitt (301) des Befestigungsbauglieds (30) sich schneiden.

12. Das Kraftfahrzeug vom Sattel-Grätschsitztyp gemäß Anspruch 11, bei dem
das Befestigungsbauglied (30) ein Paar von plattenförmigen Baugliedern (31, 33) umfasst, die sich in der Breitenrichtung (W) des Fahrzeugs (100) erstrecken und an dem Sitzrahmen (20) angebracht sind, wobei in der Vorne-und-hinten-Richtung (L) des Fahrzeugs (100) ein Abstand zwischen denselben vorliegt,
die Sensorabdeckung (40) eine Mehrzahl von Schlitzen (40S) aufweist, die sich in der Auf- und Ab-Richtung (Z) erstrecken,
der Sensorhauptkörper (10A) angepasst ist, in der Breitenrichtung (W) des Fahrzeugs (100) zwischen das Paar von plattenförmigen Baugliedern (31, 33) eingeführt zu werden, und
das Paar von plattenförmigen Platten angepasst ist, in die Mehrzahl von Schlitzen (40S) der Sensorabdeckung (40) eingeführt zu werden, wobei der Sensorhauptkörper (10A) in der Öffnung (40H) der Sensorabdeckung (40) angeordnet ist.

13. Das Kraftfahrzeug vom Sattel-Grätschsitztyp gemäß einem der Ansprüche 1 bis 12, bei dem
der Sitzrahmen (20) einen kreisförmigen Querschnittsabschnitt aufweist und
das Befestigungsbauglied (30) durch Schweißen mit einer Mehrzahl von Abschnitten verbunden ist, die in einer Umfangsrichtung des kreisförmigen Querschnittsabschnitts des Sitzrahmens (20) voneinander beabstandet sind.

14. Das Kraftfahrzeug vom Sattel-Grätschsitztyp gemäß einem der Ansprüche 1 bis 13, bei dem
das Befiestigungsbauglied (30) Folgendes aufweist:
einen Seitenabschnitt (31 w, 33w), der an einer Seite des Sitzrahmens (20) positioniert ist und an einen Seitenabschnitt des Sitzrahmens (20) angeschweißt ist, und
einen unteren Abschnitt (32w), der unter dem Sitzrahmen (20) positioniert ist und an einen unteren Abschnitt des Sitzrahmens (20) angeschweißt ist.

15. Das Kraftfahrzeug vom Sattel-Grätschsitztyp gemäß Anspruch 14, bei dem
eine Schweißfläche an dem unteren Abschnitt (32w) größer als eine Schweißfläche an dem Seitenabschnitt (31w, 33w) ist.

## Revendications

1. Véhicule à moteur de type à selle à enfourcher, comprenant:
une roue arrière (108);
un siège (114);
un châssis de carrosserie de véhicule (1X) s'étendant dans une direction vers l'avant et vers l'arrière (L) du véhicule (100) et comportant un cadre de siège (20) adapté pour supporter le siège (114);
un élément de support de roue arrière (107) adapté pour supporter la roue arrière (108) au châssis de carrosserie de véhicule (1X) de manière à pouvoir pivoter;
un capteur d'angle d'inclinaison (10) adapté pour détecter un état incliné du véhicule (100); et
un élément de fixation (30) adapté pour fixer le capteur d'angle d'inclinaison (10) au-dessous du siège (114), où
au moins une part du cadre de siège (20) est disposée entre la roue arrière (108) et le siège (114) dans une direction vers le haut et vers le bas (Z) du véhicule (100);
**caractérisé par le fait que**
le capteur d'angle d'inclinaison (10) est disposé de manière à ne pas venir en recouvrement avec un axe central de véhicule (L1) passant par un centre de la roue arrière (108) dans un sens de la largeur (W), lorsque vu en vue en plan.

2. Véhicule à moteur de type à selle à enfourcher selon la revendication 1, dans lequel
le capteur d'angle d'inclinaison (10) présente un corps principal (10A) présentant une surface supérieure (10t) et une surface inférieure (10b) et un segment de câblage (10B) connecté à la surface supérieure (10t) ou à la surface inférieure (10b) du corps principal (10A).

3. Véhicule à moteur de type à selle à enfourcher selon la revendication 1 ou 2, dans lequel
une partie centrale du siège (114) dans la direction vers l'avant et vers l'arrière (L) du véhicule (100) est positionnée derrière une partie d'extrémité avant (R1) de la roue arrière (108).

4. Véhicule à moteur de type à selle à enfourcher selon l'une quelconque des revendications 1 à 3, dans lequel
le cadre de siège (20) comporte une paire d'éléments de cadre s'étendant dans la direction vers l'avant et vers l'arrière (L) du véhicule (100) de manière à être espacées l'un de l'autre avec l'axe central du véhicule (L1) entre eux, lorsque vu en vue en plan, et
l'élément de fixation (30) est fixé à un élément de cadre de la paire d'éléments de cadre pour supporter le capteur d'angle d'inclinaison (10) entre la paire d'éléments de cadre.

5. Véhicule à moteur de type à selle à enfourcher selon la revendication 4, comprenant par ailleurs:
une paire de couvercles latéraux (120) prévus de manière à recouvrir l'extérieur de la paire d'éléments de cadre dans le sens de la largeur (W) du véhicule (100), où
la paire de couvercles latéraux (120) sont prévus de manière à recouvrir l'extérieur du capteur d'angle d'inclinaison (10).

6. Véhicule à moteur de type à selle à enfourcher selon l'une quelconque des revendications 1 à 5, comprenant par ailleurs:
un élément de couvercle (121) disposé entre la roue arrière (108) et le siège (114) dans la direction vers le haut et vers le bas (Z) du véhicule (100), où
l'élément de couvercle (121) est prévu de manière à venir en recouvrement avec l'axe central de véhicule (L1), lorsque vu en vue de dessus, et
le capteur d'angle d'inclinaison (10) est disposé entre le siège (114) et l'élément de couvercle (121) dans la direction vers le haut et vers le bas (Z) du véhicule (100).

7. Véhicule à moteur de type à selle à enfourcher selon l'une quelconque des revendications 1 à 6, dans lequel
le capteur d'angle d'inclinaison (10) est aménagé de manière à être positionné derrière une extrémité la plus haute (R2) de la roue arrière (108) dans la direction vers l'avant et vers l'arrière (L) du véhicule (100).

8. Véhicule à moteur de type à selle à enfourcher selon l'une quelconque des revendications 1 à 7, dans lequel
l'élément de fixation (30) est formé en acier et est formé de manière à s'étendre dans le sens de la largeur (W) du véhicule (100), et
le capteur d'angle d'inclinaison (10) comporte
un élément pendulaire (13) prévu de manière à pouvoir pivoter dans un plan parallèle à la direction de la largeur (W) et à la direction vers le haut et vers le bas (Z) du véhicule (100),
un corps magnétique (14) prévu sur l'élément pendulaire (13), et
un composant de détection (15) adapté pour détecter une position du corps magnétique (14).

9. Véhicule à moteur de type à selle à enfourcher selon la revendication 8, dans lequel
le cadre de siège (20) est formé en acier, et
l'élément de fixation (30) présente un limiteur (31p, 31s, 33p, 33s) adapté pour limiter le capteur d'angle d'inclinaison (10) dans son déplacement dans le sens de la largeur (W) du véhicule (100).

10. Véhicule à moteur de type à selle à enfourcher selon l'une quelconque des revendications 1 à 9, comprenant par ailleurs:
un dispositif de verrouillage de siège (130) prévu sur le cadre de siège (20) de manière à s'étendre dans le sens de la largeur (W) du véhicule (100); et
un moyen de fixation (114F) prévu à un centre du siège (114) dans le sens de la largeur (W) et fixé de manière amovible par le dispositif de verrouillage de siège (130), où
le capteur d'angle d'inclinaison (10) est disposé derrière le dispositif de verrouillage de siège (130) et est disposé d'un côté du moyen de fixation (114F) dans le sens de la largeur (W) du véhicule (100).

11. Véhicule à moteur de type à selle à enfourcher selon l'une quelconque des revendications 1 à 10, dans lequel
le capteur d'angle d'inclinaison (10) comporte
un corps principal de capteur (10A), et
un couvercle de capteur (40) adapté pour recouvrir le corps principal de capteur (10A), le couvercle de capteur (40) présentant une ouverture (40H) destinée à recevoir le corps principal de capteur (10A), et
l'élément de fixation (30) présente une partie d'insertion (301) destiné à recevoir le corps principal de capteur (10A), et
une direction d'insertion du corps principal de capteur (10A) dans le couvercle de capteur (40) et une direction d'insertion du corps principal de capteur (10A) dans la partie d'insertion (301) de l'élément de fixation (30) se croisent entre elles.

12. Véhicule à moteur de type à selle à enfourcher selon la revendication 11, dans lequel
l'élément de fixation (30) comporte une paire d'éléments en forme de plaque (31, 33) s'étendant dans le sens de la largeur (W) du véhicule (100) et fixés au cadre de siège (20) avec un espace entre eux dans la direction vers l'avant et vers l'arrière (L) du véhicule (100),
le couvercle de capteur (40) présente une pluralité de fentes (40S) s'étendant dans la direction vers le haut et vers le bas (Z),
le corps principal de capteur (10A) est adapté pour être inséré entre la paire d'éléments en forme de plaque (31, 33) dans le sens de la largeur (W) du véhicule (100), et
la paire de plaques en forme de plaque sont adaptées pour être insérées dans la pluralité de fentes (40S) du couvercle de capteur (40) avec le corps principal de capteur (10A) disposé dans l'ouverture (40H) du couvercle de capteur (40).

13. Véhicule à moteur de type à selle à enfourcher selon l'une quelconque des revendications 1 à 12, dans lequel
le cadre de siège (20) présente une partie de section circulaire, et
l'élément de fixation (30) est connecté par soudage à une pluralité de parties espacées l'une de l'autre dans une direction circonférentielle de la partie de section circulaire du cadre de siège (20).

14. Véhicule à moteur de type à selle à enfourcher selon l'une quelconque des revendications 1 à 13, dans lequel
l'élément de fixation (30) présente
une partie latérale (31w, 33w) positionnée d'un côté du cadre de siège (20) et soudée à une partie latérale du cadre de siège (20), et
une partie inférieure (32w) positionnée au-dessous du cadre de siège (20) et soudée à une partie inférieure du cadre de siège (20).

15. Véhicule à moteur de type à selle à enfourcher selon la revendication 14, dans lequel
une zone de soudage à la partie inférieure (32w) est plus grande qu'une zone de soudage à la partie latérale (31w, 33w).
